# EUROPEAN PATENT APPLICATION

(11) **EP 0 811 830 A1**
(43) Date of publication of application: **10.12.1997**
(21) Application number: 96830320.6
(22) Date of filing: 05.06.1996
(51) Int. Cl.: G01L 1/00, H01H 35/24, H01H 35/34, G01L 7/08, G01L 19/00

(54) **Differential manostat, particularly for gas boiler**

(71) Applicant: MERLONI TERMOSANITARI S.p.A., I-60044 Fabriano (Ancona) (IT)
(72) Inventor: Manini, Andrea, Merloni Termosanitari S.p.A., 6044 Fabriano (AN) (IT); Lacitignola, Pietro, Merloni Termosanitari S.p.A., 6044 Fabriano (AN) (IT)
(74) Representative: Iannone, Carlo Luigi

(57) **Abstract**

The invention relates to a differential manostat, particularly for wall gas boilers, comprising a lower body (1) and an upper body (8), joined each other and realising, by the interposition of a membrane element (7), a lower chamber (5) having a higher pressure and an upper chamber (8) having a lower pressure, respectively connected with a higher pressure intake (2) and with a lower pressure intake (3), within said upper body (8) a movable element (11) with magnet (14) being provided, said movable element (11) when is in the rest position rests on said membrane element (7), and outside of said upper body (8) a reed (19) being provided, said reed (19) interacting with said magnet (14) opening and closing the contacts of a circuit.

## Description

The present invention relates to an improved differential manostat, particularly for wall gas boilers.

More particularly, the invention relates to a manostat of the above kind extremely safe and cheap.

As it is well known, in order to obtain the safety for wall gas boilers, it is necessary to interrupt the gas circuit each time a lack of water, or a water flow rate lower than a pre-established minimum value.

The measurement of the flow rate is usually realised measuring the pressure difference between two points of the boiler main circuit, e.g. by the pressure of a Venturi tube, upward and downward the pump, at the entrance and at the exit of the heat exchanger, etc.

In order to obtain such a result, said points are, if possible, directly connected each other, or they are connected by suitable tubes, to the inlet of a manostat which, when the pressure difference goes under said pre-established value, trips a switch that directly or indirectly provides a control to close the gas output.

Presently, different kind of manostats are known, all of them characterized by many problems.

Among the prior art manostats, the most known and used is a manostat made up of two bodies, generally realised by bronze, with a rubber membrane put between them and upon which a washer rests and here a rod is connected, said rod exiting through a sealing system, and in case a pre-established due to the pressure difference occurs, it controls a microswitch.

However, this kind of manostat has some drawbacks, e.g. a not absolute safety with respect to losses which are always possible either due to wear or due to seal gasket defects, and even less the possibility of severe friction in case the apparatus remains unused for a long time.

Another kind of manostat known in the art, which is substantially without losses, is the double magnet manostat.

This solution provides a movable magnet within the manostat, connected with the membrane and another magnet provided outside. By repulsion, when the outside magnet approaches to the inner magnet, this last moves guided and pushes the microswitch lever.

The latter magnetic manostat is expensive since the magnets in order to work repetitively must be well centred each other and properly mounted.

In other solutions known in the art, the problem concerning the water losses has been solved providing in the inner membrane with a more or less complex metal rod making the sealing without creating out of control friction which would make the calibration value not reproducible.

This last solution has the drawback of a short useful life for the continued cycles which occurs on a wall boiler and due to the breaking of the membrane in correspondence of the discontinuity between the rubber and the metallic rod.

In view of the above, the Applicant has thought and realised a differential manostat able to obviate all the abovementioned drawbacks.

Particularly, the solution proposed according to the present invention allows to have a manostat particularly but not solely suitable for wall gas boilers, applicable on the circuit for any kind of liquid.

Further, the solution according to the invention is extremely cheap and able to guarantee an absolute safety and to avoid any blocking.

It is therefore specific object of the present invention a differential manostat, particularly for wall gas boilers, comprising a lower body and an upper body, joined each other and realising, by the interposition of a membrane element, a lower chamber having a higher pressure and an upper chamber having a lower pressure, respectively connected with a higher pressure intake and with a lower pressure intake, within said upper body a movable element with magnet being provided, said movable element when is in the rest position rests on said membrane element, and outside of said upper body a reed being provided, said reed interacting with said magnet opening and closing the contacts of a circuit.

Preferably, according to the invention, said pressure intakes, respectively higher and lower pressure intakes, are provided on said lower body, the connection between the lower pressure intake and the upper chamber being obtained by a tube, also the tube being realised in said lower body.

Still according to the invention, said membrane element is made up of a rubber membrane having a suitable elasticity and shape.

Always according to the invention, said movable element, preferably comprises a washer element resting in the rest position on said membrane element, and a substantially cylindrical element within which said magnet is housed, upperly bucked by a spring element.

Said washer can be provided with three or more sliding radial guides.

The coupling between said lower and upper bodies is obtained by screws or other suitable system.

Furthermore, according to the invention, said reed can be externally coupled with said upper body by a support having two metallic plates having at their ends the reed welded.

Further, said support can be provided with radial and/or axial positions adjustments.

Always according to the invention, it can be possible to vary the reed snap by varying the position of the reed with respect to the magnet, e.g. by mechanical adjustment means.

The present invention will be now described, for illustrative but not limitative purposes, according to its preferred embodiments, with particular reference to the figures of the enclosed drawings, wherein:
figure 1 shows a partially sectioned, axonometric view, of a manostat realised according to the invention; and
figure 2 shows a front middle section of the manostat of figure 1.

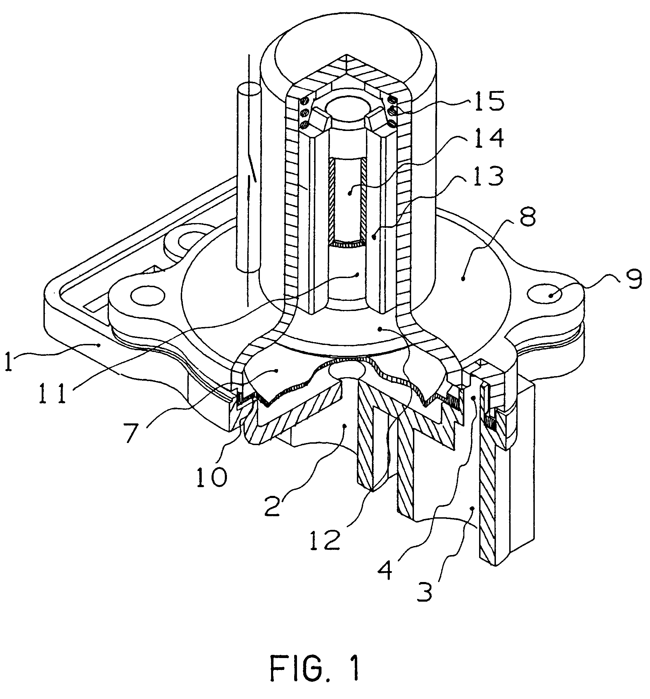

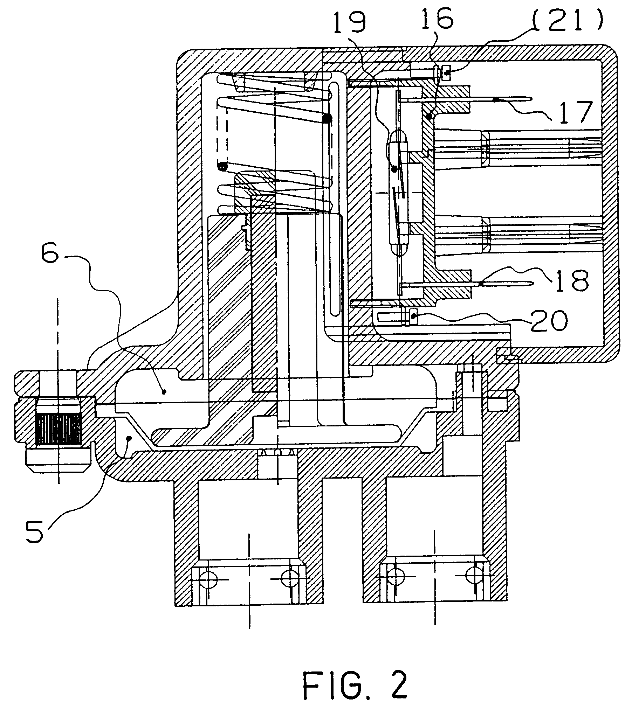

In the solution shown in figures 1 and 2, the lower body 1 of the manostat according to the invention is realised according the arrangement providing two pressure intakes, respectively higher pressure 2 and lower pressure 3, on the same body 1.

The passage of pressure from lower pressure intake 3 to the upper chamber occurs through the tube 4 integrally provided on the body 11.

The manostat provides a higher pressure chamber 5 and a lower pressure chamber 6, divided by a rubber membrane 7 having suitable elasticity and shape.

The upper body 8 of the manostat is tightened on the lower body 1 by a sufficient number of screws 9, or by another fixing means, while the outside sealing is ensured by a gasket 10 integrally obtained with the membrane 7.

On the membrane 7 a movable body is rested, said body being made up of a washer 12 provided with three or more sliding radial guides.

Within said movable body 11 a magnet 14 is introduced.

The movable body 11 is maintained in position adherent to the membrane 7 by a suitably radially guided spring 15.

Outside the body 8 a support is placed, said support sustaining two metallic plates 17, 18, on the inner ends of which a reed 19 is welded.

The support 16 can be provided with radial 20 and axial 21 position adjustments.

For a pre-established value of the spring 15, a snapping value of the manostat is obtained: the movable body 11 moves upward and the magnet 14 closes the reed 19.

For particular uses, at the same spring 15 value, and thus at the same pressure difference, giving the ON signal, it is possible within certain limits to modify the OFF value adjusting the reciprocal position of the reed 19 with respect to the magnet 14 by the adjustment elements.

When the value of the flow rate is balanced on the basis of the pre-established value, the reed 19 is opened.

When the pressure in the chamber 5 increases, the movable body 11 exceed the spring 15 force, so that the magnet 14 determines the snapping of the reed 19 and thus the closure of the connected circuit, not shown.

The present invention has been described for illustrative but not limitative purposes, according to its preferred embodiments, but it is to be understood that modifications and/or changes can be introduced by those skilled in the art without departing from the relevant scope as defined in the enclosed claims.

## Claims

1. Differential manostat, particularly for wall gas boilers, characterized in that it comprises a lower body and an upper body, joined each other and realising, by the interposition of a membrane element, a lower chamber having a higher pressure and an upper chamber having a lower pressure, respectively connected with a higher pressure intake and with a lower pressure intake, within said upper body a movable element with magnet being provided, said movable element when is in the rest position rests on said membrane element, and outside of said upper body a reed being provided, said reed interacting with said magnet opening and closing the contacts of a circuit.

2. Differential manostat according to claim 1, characterized in that said pressure intakes, respectively higher and lower pressure intakes, are provided on said lower body, the connection between the lower pressure intake and the upper chamber being obtained by a tube, also the tube being realised in said lower body.

3. Differential manostat according to one of the preceding claims, characterized in that said membrane element is made up of a rubber membrane having a suitable elasticity and shape.

4. Differential manostat according to one of the preceding claims, characterized in that said movable element comprises a washer element resting in the rest position on said membrane element, and a substantially cylindrical element within which said magnet is housed, upperly bucked by a spring element.

5. Differential manostat according to claim 4, characterized in that said washer is provided with three or more sliding radial guides.

6. Differential manostat according to one of the preceding claims, characterized in that the coupling between said lower and upper bodies is obtained by screws or other suitable system.

7. Differential manostat according to one of the preceding claims, characterized in that said reed is externally coupled with said upper body by a support having two metallic plates having at their ends the reed welded.

8. Differential manostat according to one of the preceding claims, characterized in that said support is provided with radial and/or axial positions adjustments.

9. Differential manostat according to one of the preceding claims, characterized in that it is possible to vary the reed snap by varying the position of the reed with respect to the magnet.

10. Differential manostat according to one of the preceding claims, characterized in that the variation of the reed snap by mechanical adjustment means.
